# EUROPEAN PATENT SPECIFICATION

(11) **EP 0 748 973 B1**
(45) Date of publication and mention of the grant of the patent: **02.02.2000**
(21) Application number: 96201654.9
(22) Date of filing: 13.06.1996
(51) Int. Cl.: F16L 21/03

(54) **Pipe part having a socket provided with a sealing assembly, and sealing assembly**
Rohrteil mit einer Muffe mit einer Dichtungsanordnung sowie Dichtungsanordnung hierfür
Section de tuyau comportant un manchon avec ensemble d'étanchéité et ensemble d'étanchéité

(30) Priority: 16.06.1995 NL 1000584
(43) Date of publication of application: 18.12.1996
(73) Proprietor: WAVIN B.V., 8011 CW Zwolle (NL)
(72) Inventor: Kanters, Arnoldus Franciscus Cornelis, 7701 MK Dedemsvaart (NL); Pedersen, Erik Sejr, 8471 Sabro (DK)
(74) Representative: Iemenschot, Johannes Andreas, Ir.

(56) References cited:
- DE-B- 1 153 952
- GB-A- 457 629
- GB-A- 2 144 190
- GB-A- 2 213 223
- US-A- 4 834 398
- US-A- 5 213 339

## Description

The invention relates to a pipe part according to the preamble of claim 1.

A pipe part of this type is known from GB-A-457,629. In this known pipe part, the annular rib forms a part of the sealing portion of the sealing ring and is arranged near the free end of the sealing ring, where the sealing ring has a substantially round cross-section.

The disadvantage of the known pipe part is that, due to the fact that the annular rib is the main sealing portion of the sealing ring which has to be deformed in order to perform its sealing function, the correct positioning of the sealing element with respect to the socket cannot be guaranteed.

The object of the invention is to provide a pipe part in which this disadvantage does not occur.

This object is achieved according to the invention in a pipe part with the characteristic features of claim 1.

A very good fixation and a very accurate positioning of the sealing assembly in the axial direction with respect to the socket is achieved by means of this annular rib. Even in the event of axial movements of the spigot in the socket, the sealing assembly will remain in place. Due to the deformability of the material of the rib, accurate positioning is still achieved even in the event of relatively large tolerances of the internal diameter. This means that the sealing element is also well suited for use in sockets which are moulded to pipes and in sockets which are produced by injection-moulding, in which case the internal groove is formed without using folding cores.

Preferred embodiments of the pipe part according to the invention are defined in the dependent claims.

The invention likewise relates to a sealing assembly according to claim 6 which is suitable for use in a pipe part with a socket according to the invention.
US-A-4,834,398 discloses a sealing assembly comprising a sealing ring made of an elastomeric material and having a sealing portion, and a retaining ring made of rigid material which is firmly connected to the sealing ring and which extends in axial direction away from the sealing ring, the sealing assembly being provided on the radial outside with an annular rib which projects radially outwards and is made of resilient material, at least a portion of the annular rib being arranged on the radial outside of the retaining ring.

In this sealing assembly the sealing portion of the sealing ring is arranged radially inside the annular rib.

The invention will be explained in the following exemplary embodiment with reference to the drawing, in which:
Fig. 1 shows an axial cross-section through part of a socket of a pipe part according to the invention;
Fig. 2 is an axial cross-section through a first embodiment of a sealing assembly which can be used in the pipe part according to the invention;
Fig. 3 is a partial axial cross-section through a second embodiment (top) and a third embodiment (bottom) of a sealing assembly which can be used in the pipe part according to the invention.

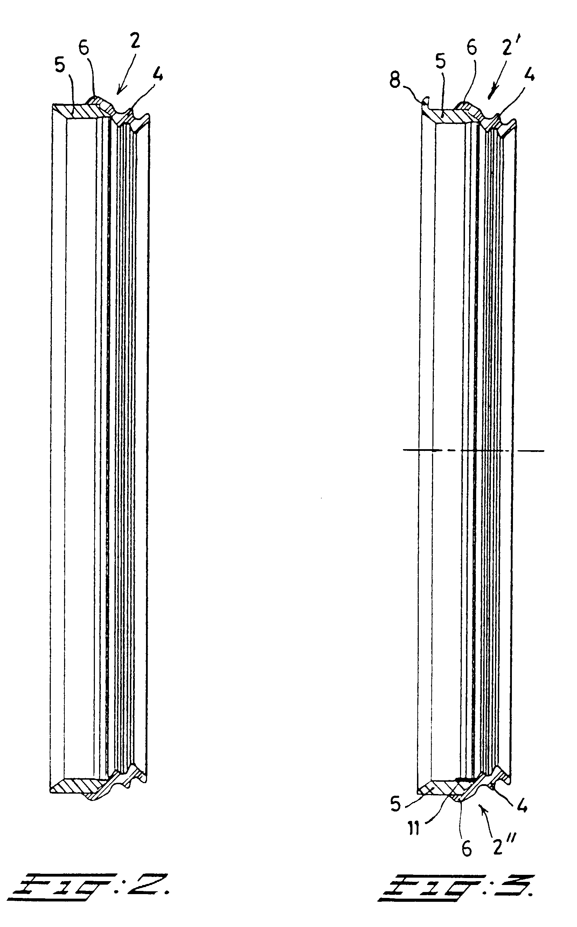

In Fig. 1, part of a socket 1 of a pipe part according to the invention is depicted. The socket 1 is provided on the inside with a separate sealing assembly 2. A spigot 3 of another pipe part can be inserted into the socket 1, in order to form a connection between these two pipe parts. In particular, the pipe parts are produced from a plastic, such as polyvinyl chloride (PVC) or polypropylene (PP), but the invention is not limited to these materials.

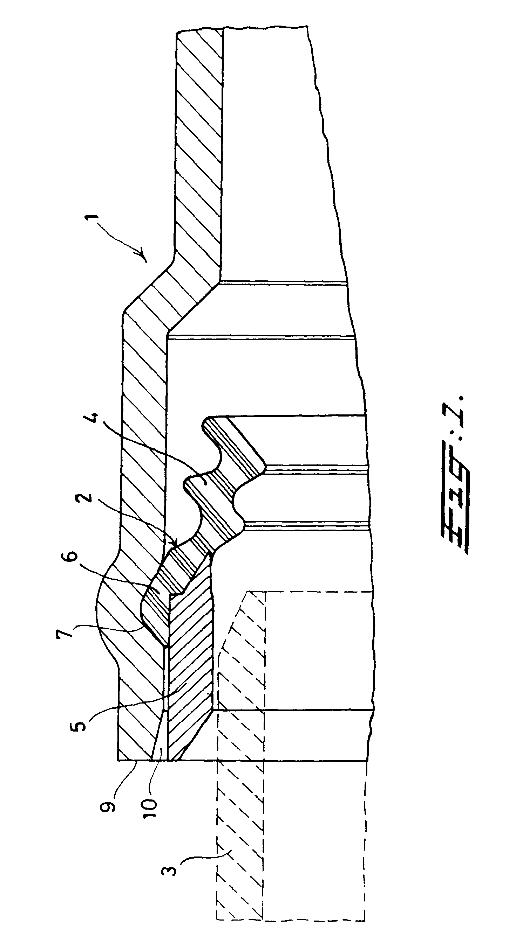

The sealing assembly 2, which is depicted in its entirety in Fig. 2, comprises a sealing ring 4 made of an elastomeric material and a rigid retaining ring 5, which is firmly connected to the sealing ring 4 and is made of a rigid material. The sealing ring 4 is intended to provide the sealing between the socket 1 and the spigot 3 when the spigot 3 is inserted into the socket 1. The retaining ring 5 is preferably produced from a rigid plastic, for example polypropylene.

The sealing assembly 2 is preferably produced by co-injection, the sealing ring 4 and the retaining ring 5 being firmly connected to one another during the moulding process. In this case, the sealing ring 4 preferably consists of a thermoplastic elastomer which adheres well to the material of the retaining ring 5. It is, however, also possible to connect the sealing ring 4 and the retaining ring 5 to one another in a different manner.

The sealing assembly 2 is provided on the outside with an annular rib 6 which projects radially outwards. At least a portion of the rib 6 is arranged on the outside of the retaining ring 5. This rib 6 fits into a groove 7 arranged on the inside of the socket 4. In this way, the sealing assembly is very accurately positioned in the axial direction with respect to the socket 1. Axial movements by the spigot 3 inserted into the socket 1 have no effect on the position of the sealing assembly 2 with respect to the socket 1.

The rib 6 preferably forms part of the sealing ring 4 and is, in this case, arranged in the region of the connection between the sealing ring and the retaining ring 5.

At the end connected to the sealing ring 4, the retaining ring 5 is preferably provided with a tapered portion. In this way a very good connection to the sealing ring 4 is achieved.

In Fig. 3, two embodiments of a sealing assembly are depicted which have been modified slightly with respect to the embodiment of Fig. 2.

In the top part of the figure, an embodiment of a sealing assembly 2' is depicted in which the retaining ring 5' is provided on the side remote from the sealing ring 4 with a radially outwardly projecting flange 8. The flange 8 bears against the front end 9 of the socket 1 or is at a small distance therefrom when the sealing assembly 2' is arranged in the socket 1 (see Fig. 1). The flange 8 serves to mask the gap 10 between the retaining ring 5' and the socket 1. The flange 8 is not necessary for positioning the sealing element 2' in the socket 1.

In the bottom part of Fig. 3, an embodiment of a sealing assembly 2'' is depicted, in which the retaining ring 5 is provided, at least in the vicinity of the connection to the sealing ring 4, with a thin layer 11 which consists of the same material as the sealing ring 4. As a result, a better connection between the sealing ring 4 and the retaining ring 5 can be achieved.

In the depicted embodiments of the sealing assembly 2, 2', 2'', the sealing ring 4 has a slightly conical basic shape and a zigzag shaped cross-section.

In the first place, the retaining ring 5, 5' ensures the dimensional stability and thus the ease of handling of the sealing assembly 2, 2', 2''. The sealing assembly can thus be mounted in the socket 1 by a machine. In addition, the retaining ring 5, 5' centres the spigot 3 in the socket 1. As a result, the socket 1 can be relatively short and does not have to be very accurately dimensioned.

In the depicted embodiments of the sealing assembly 2, 2', 2'', the retaining ring 5, 5' supports part of the sealing ring 4 against the inside of the socket and ensures that the annular rib 6 is correctly retained.

If the pipe parts are produced from a thermoplastic, they can be produced, for example, by injection-moulding or by extrusion. It is, however, also possible for the pipe parts to be wound or pressed and to consist of fibre-reinforced thermosetting plastic.

The socket can be a socket which is integrally moulded on a pipe or can form part of a fitting, such as a double insertion socket, a T-piece or a Y-piece.

The invention is not limited to the embodiments of a pipe part having a socket and a sealing assembly which are described above and depicted in the drawing. Both the socket and the sealing ring, and also the retaining ring, can have a different form. It is, however, important that the sealing assembly be provided on the outside with an annular rib which projects outwards and is made of resilient material. This rib does not have to form part of the sealing ring.

## Claims

1. Pipe part having at least one socket (1), into which a spigot (3) of another pipe part can be inserted, the socket (1) having a groove arranged on the inside of the socket at distance from the free end of the socket and being provided on the inside with a separate, annular sealing assembly (2, 2', 2") comprising a sealing ring (4) made of an elastomeric material and having a sealing portion intended to provide the sealing between the socket (1) and the spigot (3) when the spigot is inserted into the socket (1), and a retaining ring (5, 5') made of a rigid material which is firmly connected to the sealing ring and which extends from the sealing ring towards and substantially as far as the free end of the socket, the sealing assembly being provided on the radial outside with an annular rib (6) which projects radially outwards, is made of resilient material and fits into the groove (7), characterized in that at least a portion of the annular rib (6) is arranged on the radial outside of the retaining ring (5, 5') and in that the sealing portion of the sealing ring (4) is arranged at an axial distance from the annular rib (6) and extends substantially in axial direction away from the annular rib (6) and the retaining ring (5) into a portion of the socket (1) located next to the groove (7) at the side of the groove facing away from the free end of the socket.

2. Pipe part according to claim 1, wherein the annular rib (6) forms a part of the sealing ring (4) and is arranged in the region of the connection between the sealing ring and the retaining ring (5, 5').

3. Pipe part according to claim 1 or 2, wherein the retaining ring (5, 5') is provided at its end connected to the sealing ring (4) with a tapered portion.

4. Pipe part according to anyone of claims 1 to 3, wherein the retaining ring (5) is provided, at least in the vicinity of the connection to the sealing ring (4), with a thin layer (11) which consists of the same material as the sealing ring (4) .

5. Pipe part according to anyone of claims 1 to 4, wherein the sealing portion of the sealing ring (4) has a slightly conical basic shape and a zigzag shaped cross-section.

6. Annular sealing assembly (2, 2', 2") comprising a sealing ring (4) made of an elastomeric material and having a sealing portion intended to provide the sealing between a socket of a pipe part and a spigot when the spigot is inserted into the socket, and a retaining ring (5, 5') made of a rigid material which is firmly connected to the sealing ring and which extends in axial direction away from the sealing ring (4), the sealing assembly being provided on the radial outside with an annular rib (6) which projects radially outwards and is made of resilient material, at least a portion of the annular rib (6) being arranged on the radial outside of the retaining ring (5, 5'), the sealing portion of the sealing ring (4) being arranged at an axial distance from the annular rib (6) and extending in substantially axial direction away from annular rib (6) and the retaining ring (5).

7. Sealing assembly according to claim 6, wherein the annular rib (6) forms a part of the sealing ring (4) and is arranged in the region of the connection between the sealing ring and the retaining ring (5, 5').

8. Sealing assembly according to claim 6 or 7, wherein the retaining ring (5, 5') is provided at its end connected to the sealing ring (4) with a tapered portion.

9. Sealing assembly according to anyone of claims 6 to 8, wherein the retaining ring (5) is provided, at least in the vicinity of the connection to the sealing ring (4), with a thin layer (11) which consists of the same material as the sealing ring (4) .

10. Sealing assembly according to anyone of claims 6 to 9, wherein the sealing portion of the sealing ring (4) has a slightly conical basic shape and a zigzag shaped cross-section.

## Patentansprüche

1. Rohrteil mit zumindest einer Muffe (1), in die ein Einsteckteil (3) eines anderes Rohrteils eingesetzt werden kann, wobei die Muffe (1) eine auf der Innenseite der Muffe in einem Abstand vom freien Muffenende angeordnete Nut aufweist und auf der Innenseite mit einer gesonderten, ringförmigen Dichtungsanordnung (2,2',2") versehen ist, die einen aus einem elastomeren Material gefertigten und einen Dichtungsbereich aufweisenden Dichtungsring (4) zur Herbeiführung der Abdichtung zwischen der Muffe (1) und dem Einsteckteil (3) bei in die Muffe (1) eingesetztem Einsteckteil und einen aus einem steifen Material gefertigten Haltering (5,5') umfaßt, der mit dem Dichtungsring fest verbunden ist und der sich vom Dichtungsring zum freien Ende der Muffe und im wesentlichen soweit wie dieses erstreckt, wobei die Dichtungsanordnung auf der radialen Außenseite mit einer ringförmigen Rippe (6) versehen ist, die radial nach außen vorsteht, aus elastischem Material gefertigt ist und in die Nut (7) eingepaßt ist, dadurch gekennzeichnet, daß zumindest ein Bereich der ringförmigen Rippe (6) auf der radialen Außenseite des Halterings (5,5') angeordnet ist und daß der Dichtungsbereich des Dichtungsringes (4) in einem axialen Abstand von der ringförmigen Rippe (6) angeordnet ist und sich im wesentlichen in axialer Richtung von der ringförmigen Rippe (6) und dem Haltering (5) in einen Bereich der Muffe (1) erstreckt, der der Nut (7) an der vom freien Muffenende abgewandten Nutseite nächstgelegen ist.

2. Rohrteil nach Anspruch 1, bei dem die ringförmige Rippe (6) einen Teil des Dichtungsrings (4) bildet und im Bereich der Verbindung zwischen dem Dichtungsring und dem Haltering (5,5') angeordnet ist.

3. Rohrteil nach Anspruch 1 oder 2, bei dem der Haltering (5,5') an seinem mit dem Dichtungsring (4) verbundenen Ende mit einem verjüngten Bereich versehen ist.

4. Rohrteil nach einem der Ansprüche 1 bis 3, bei dem der Haltering (5), zumindest im Nahbereich der Verbindung mit dem Dichtungsring (4), mit einer dünnen Schicht (11) versehen ist, die aus dem gleichen Material wie der Dichtungsring (4) besteht.

5. Rohrteil nach einem der Ansprüche 1 bis 4, bei dem der Dichtungsbereich des Dichtungsrings (4) eine leicht konische Grundform und einen zickzackförmigen Querschnitt aufweist.

6. Ringförmige Dichtungsanordnung (2,2',2") mit einem aus einem elastomeren Material gefertigten und einen Dichtungsbereich aufweisenden Dichtungsring (4) zur Herbeiführung der Abdichtung zwischen der Muffe eines Rohrteils und einem Einsteckende bei in die Muffe eingesetztem Einsteckende und einem aus einem steifen Material gefertigten Haltering (5,5'), der mit dem Dichtungsring fest verbunden ist und sich in axialer Richtung vom Dichtungsring (4) forterstreckt, wobei die Dichtungsanordnung auf der radialen Außenseite mit einer ringförmigen Rippe (6) versehen ist, die radial nach außen ragt und aus elastischem Material gefertigt ist, zumindest ein Bereich der ringförmigen Rippe (6) auf der radialen Außenseite des Halterings (5,5') angeordnet ist und der Dichtungsbereich des Dichtungsrings (4) in einem axialen Abstand von der ringförmigen Rippe (6) angeordnet ist und sich in im wesentlichen axialer Richtung von der ringförmigen Rippe (6) und dem Haltering (5) forterstreckt.

7. Dichtungsanordnung nach Anspruch 6, bei der die ringförmige Rippe (6) einen Teil des Dichtungsrings (4) bildet und im Bereich der Verbindung zwischen dem Dichtungsring und dem Haltering (5,5') angeordnet ist.

8. Dichtungsanordnung nach Anspruch 6 oder 7, bei der der Haltering (5,5') an seinem mit dem Dichtungsring (4) verbundenen Ende mit einem verjüngten Bereich versehen ist.

9. Dichtungsanordnung nach einem der Ansprüche 6 bis 8, bei der der Haltering (5), zumindest im Nahbereich der Verbindung mit dem Dichtungsring (4), mit einer dünnen Schicht (11) versehen ist, die aus dem gleichen Material wie der Dichtungsring (4) besteht.

10. Dichtungsanordnung nach einem der Ansprüche 6 bis 9, bei der der Dichtungsbereich des Dichtungsrings (4) eine leicht konische Grundform und einen zickzackförmigen Querschnitt aufweist.

## Revendications

1. Section de tuyau comprenant au moins un manchon (1), dans lequel il est possible d'insérer un embout (3) provenant d'une autre section de tuyau, le manchon (1) comportant une rainure placée à l'intérieur du manchon, à distance de l'extrémité libre du manchon, et dotée à l'intérieur d'un montage d'étanchéité annulaire et séparé (2, 2', 2") comportant un anneau d'étanchéité (4) fait d'un élastomère et ayant une section étanche destinée à assurer l'étanchéité entre le manchon (1) et l'embout (3) lorsque l'embout est inséré à l'intérieur du manchon (1), et une bague de fermeture (5, 5') faite d'un matériau rigide qui est fermement connectée à l'anneau d'étanchéité et qui se prolonge à partir de l'anneau d'étanchéité vers l'extrémité libre du manchon jusqu'à atteindre substantiellement ladite extrémité, le montage d'étanchéité étant doté sur sa partie extérieure radiale d'un rebord annulaire (6) qui se projette radialement vers l'extérieur est fait d'un matériau élastique et s'insère dans la rainure (7), caractérisé en ce qu'au moins une partie du rebord annulaire (6) est placée sur la partie extérieure radiale de la bague de fermeture (5, 5') et en ce que la section étanche de l'anneau d'étanchéité (4) est placée à une distance axiale du rebord annulaire (6) et se prolonge substantiellement dans une direction axiale en s'éloignant du rebord annulaire (6) et de la bague de fermeture (5) dans une section du manchon (1) située à côté de la rainure (7) du côté de la rainure qui ne fait pas face à l'extrémité libre du manchon.

2. Section de tuyau selon la revendication 1, dans laquelle le rebord annulaire (6) fait partie de l'anneau d'étanchéité (4) et est situé dans la région de connexion entre l'anneau d'étanchéité et la bague de fermeture (5, 5').

3. Section de tuyau selon la revendication 1 ou la revendication 2, dans laquelle la bague de fermeture (5, 5') est dotée d'une section conique à son extrémité connectée à l'anneau d'étanchéité (4).

4. Section de tuyau selon l'une quelconque des revendications 1 à 3, dans laquelle la bague de fermeture (5) est dotée, au moins au voisinage de la connexion à l'anneau d'étanchéité (4), d'une fine couche (11) faite du même matériau que l'anneau d'étanchéité (4).

5. Section de tuyau selon l'une quelconque des revendications 1 à 4, dans laquelle la section étanche de l'anneau d'étanchéité (4) se présente sous une forme légèrement conique de base et comporte une section transversale en zigzag.

6. Montage annulaire d'étanchéité (2, 2', 2") comportant un anneau d'étanchéité (4) fait d'un élastomère et comprenant une section étanche destinée à assurer l'étanchéité entre un manchon, une section de tuyau et un embout lorsque l'embout est inséré à l'intérieur du manchon, et une bague de fermeture (5, 5') faite d'un matériau rigide qui est fermement connecté à l'anneau d'étanchéité et qui se prolonge dans une direction axiale en s'éloignant de l'anneau d'étanchéité (4), le montage d'étanchéité étant doté sur sa partie extérieure radiale d'un rebord annulaire (6) qui se projette radialement vers l'extérieur et qui est fait d'un matériau élastique, au moins une partie du rebord annulaire (6) étant placée sur la partie extérieure radiale de la bague de fermeture (5, 5'), la section étanche de l'anneau d'étanchéité (4) étant placée à une distance axiale du rebord annulaire (6) et se prolongeant substantiellement dans une direction axiale en s'éloignant du rebord annulaire (6) et de la bague de fermeture (5) .

7. Montage d'étanchéité selon la revendication 6, dans laquelle le rebord annulaire (6) fait partie de l'anneau d'étanchéité (4) et se trouve dans la région de connexion entre l'anneau d'étanchéité et la bague de fermeture (5, 5').

8. Montage d'étanchéité selon la revendication 6 ou 7, dans laquelle la bague de retenue (5, 5') est dotée d'une section conique à son extrémité connectée à l'anneau d'étanchéité (4).

9. Montage d'étanchéité selon l'une quelconque des revendications 6 à 8, dans laquelle la bague de retenue (5) est dotée, au moins au voisinage de la connexion à l'anneau d'étanchéité (4) d'une fine couche (11) faite du même matériau que l'anneau d'étanchéité (4).

10. Montage d'étanchéité selon l'une quelconque des revendications 6 à 9, dans laquelle la section étanche de l'anneau d'étanchéité (4) se présente sous une forme légèrement conique de base et comporte une section transversale en zigzag.
